Europäisches Patentamt

European Patent Office

Office européen des brevets

(19)

(11) Veröffentlichungsnummer: **0 365 853**

**A1**

(12) **EUROPÄISCHE PATENTANMELDUNG**

(21) Anmeldenummer: **89117847.7**

(22) Anmeldetag: **27.09.89**

(51) Int. Cl.5: **G03B 21/64 , G03D 15/10**

(30) Priorität: **27.10.88 DE 8813514 U**

(43) Veröffentlichungstag der Anmeldung:
**02.05.90 Patentblatt 90/18**

(84) Benannte Vertragsstaaten:
**DE FR GB**

(71) Anmelder: **L & N Plast-Kunststoffverarbeitung GmbH & Co. Betriebs KG**
**Talstrasse 30**
**D-8111 Untereglfing(DE)**

(72) Erfinder: **Neuhold, Arnold**
**Esterbergstrasse 37 a**
**D-Farchant(DE)**
Erfinder: **Loos, Peter, Dipl.-Ing.**
**Maria-Antonienweg 16 b**
**D-8110 Murnau(DE)**

(74) Vertreter: **Görg, Klaus, Dipl.-Ing. et al**
**Hoffmann, Eitle & Partner Arabellastrasse 4**
**(Sternhaus)**
**D-8000 München 81(DE)**

(54) **Diapositiv-Rähmchen.**

(57) Die Erfindung betrifft ein Diapositiv-Rähmchen mit einem jeweils ein Fenster (40) aufweisenden Oberteil (12) und Unterteil (13), die am Umfangsrand aufeinanderliegen und zwischen sich einen Diapositiv-Aufnahmeraum bilden. Die beiden Teile (12, 13) des Diapositiv-Rähmchens sind nur am Einführende für das Diapositiv auseinanderspreizbar. Der Diapositiv-Aufnahmeraum weist in Einführrichtung gesehen zwei seitliche Begrenzungen (30) auf. Im Bereich des Diapositiv-Aufnahmeraumes ist eine Klemmeinrichtung (34) für das Diapositiv vorgesehen. Die Erstreckung des Diapositiv-Aufnahmeraumes ist in Einführrichtung gesehen deutlich größer bemessen als das vorgesehene Diapositiv in dieser Erstreckung.

Fig. 1

Fig. 2

Fig. 3

### Diapositiv-Rähmchen

Die Erfindung bezieht sich auf ein Diapositiv-Rähmchen mit einem jeweils ein Fenster aufweisenden Ober- und Unterteil, die am Umfangsrand aufeinanderliegen und zwischen sich einen Diapositiv-Aufnahmeraum bilden.

Diapositiv-Rähmchen dieser Art sind in vielerlei Ausgestaltung bekannt, wobei in der Regel die großflächige Erstreckung des Diapositiv-Aufnahmeraumes nur geringfügig größer ist als das Diapositiv, so daß gerade die beim Schneiden auftretenden unterschiedlichen Abmessungen der Diapositive berücksichtigt sind. Wenn bei derartigen Diapositiv-Rähmchen das Oberteil und das Unterteil am Rand aufeinanderliegen und so an der schmalen Stirnkante eine Trennstelle aufweisen, kann eine Fehlausrichtung des Diapositivs im Rähmchen ein Aufweiten der vorgenannten Trennstelle hervorrufen mit der Folge, daß ein derartiges Diarähmchen im Diaprojektor nicht mehr einwandfrei gehandhabt werden kann, da der Schieber für das Einsetzen der Diapositiv-Rähmchen in die aufgeweitete Trennstelle gelangen und so das Diapositiv-Rähmchen zerstören kann.

Es ist daher Aufgabe der Erfindung, ein Diapositiv-Rähmchen der eingangs genannten Art zu schaffen, welches bei einfacher Einführung des Diapositivs in das Rähmchen eine sichere Positionierung des Diapositivs im Aufnahmeraum des Rähmchens gewährleistet, ohne daß die äußere Gestalt des Rähmchens verändert wird, und insbesondere ohne daß die Trennstelle an der Schmalseite der aufeinanderliegenden Teile des Rähmchens durch das Diapositiv aufgeweitet werden.

Diese Aufgabe wird erfindungsgemäß dadurch gelöst, daß die beiden Teile des Diapositiv-Rähmchens nur am Einführende für das Diapositiv auseinanderspreizbar sind, daß der Diapositiv-Aufnahmeraum in Einführrichtung gesehen zwei seitliche Begrenzungen aufweist, daß im Bereich des Diapositiv-Aufnahmeraumes eine Klemmeinrichtung für das Diapositiv vorgesehen ist und daß die Erstreckung des Diapositiv-Aufnahmeraumes in Einführrichtung gesehen deutlich größer bemessen ist als das vorgesehene Diapositiv in dieser Erstreckung.

Bei dieser Lösung kann bei dem aufgespreizten Einführende des Diapositiv-Rähmchens das Diapositiv auf einfache Weise in den Diapositiv-Aufnahmeraum eingeschoben werden, und zwar um ein vorbestimmtes Maß, bis die Klemmeinrichtung das Diapositiv einwandfrei erfaßt hat. Durch die Klemmhaltung und die nur einseitige Aufspreizmöglichkeit im Einführbereich kann der Diapositiv-Aufnahmeraum in Einführrichtung wesentlich größer gestaltet werden als das für das Rähmchen vorgesehene Diapositiv, so daß mit Sicherheit ausgeschlossen werden kann, daß das Diapositiv in den Bereich gelangt, wo das Oberteil und das Unterteil am Umfang zur Bildung der genannten Trennstelle aufeinanderliegen. Dadurch wird ein Auseinanderspreizen des Unterteils und des Oberteils im Bereich der Umfangsstirnkante sicher verhindert, was eine einwandfreie Handhabung eines derartigen Diapositivrähmchens in einem Diaprojektor erlaubt.

Hinsichtlich einer vorteilhaften Weitergestaltung können am dem Einführende entgegengesetzten, nicht auseinanderspreizbaren Ende des Rähmchens in Einführrichtung hinter der Klemmeinrichtung mindestens ein Endanschlag für das Diapositiv vorgesehen sein. Dadurch kann gezielt nach dem Klemmen des Diapositivs durch die Klemmeinrichtung die Einführbewegung des Diapositivs begrenzt werden, wobei die relativ weite Erstreckung des Diapositiv-Aufnahmeraumes im Bereich des Einführendes sicher verhindert, daß auch bei größeren Dimensionsunterschieden der geschnittenen Diapositive der Rand des Diapositivs nicht in den Auflagebereich zwischen Oberteil und Unterteil gelangen kann.

Zweckmäßigerweise kann die Klemmeinrichtung aus jeweils einem am Oberteil und Unterteil angebrachten elastisch bewegbaren Vorsprung stehen, die sich beim Einschieben des Diapositivs geringfügig auseinanderbewegen und durch ihre Rückstellkraft das Diapositiv klemmen können.

Für eine sichere Halterung des Diapositivs im Rähmchen, ggf. auch ohne seitliche Führung, besteht die Klemmeinrichtung aus zwei Klemmstellen, die im hinteren Bereich des Diapositiv-Aufnahmeraumes in einem Abstand angeordnet sind, der etwas kleiner als die Breite des Diapositivs ist.

Die Erfindung wird nachfolgend anhand des in den Zeichnungen rein schematisch dargestellten Ausführungsbeispiels näher erläutert. Es zeigt:

Fig. 1 eine perspektivische Ansicht eines Diapositiv-Rähmchens mit der Darstellung des Einsetzvorgangs des Diapositivs,

Fig. 2 eine Schnittansicht durch das mit einem Diapositiv bestückten Rähmchen entlang der Linie II-II in Fig. 3, allerdings mit Oberteil und Unterteil des Rähmchens, und

Fig. 3 eine Draufsicht auf die Innenseite des Unterteils des Diapositiv-Rähmchens.

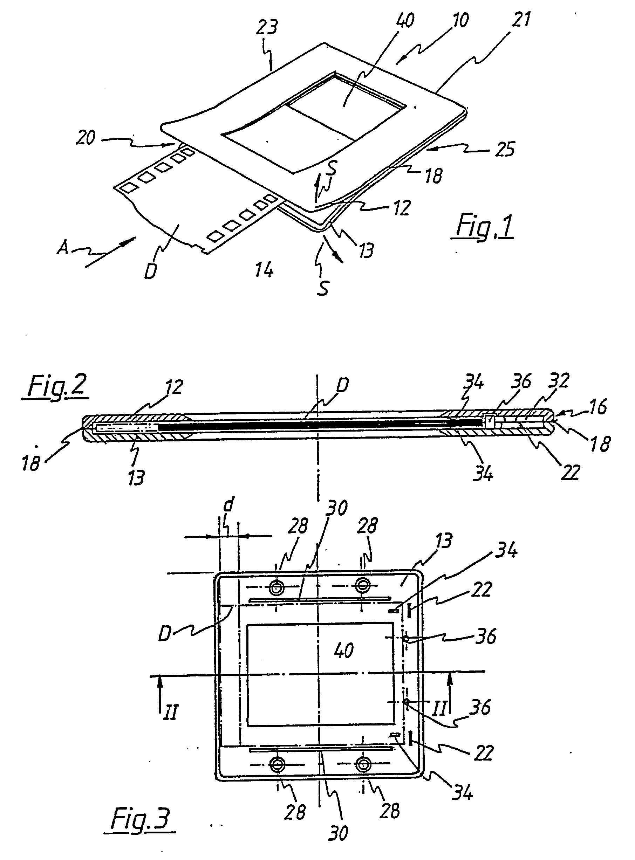

Entsprechend der Darstellung in den Zeichnungen besteht das Diapositiv-Rähmchen 10 aus einem Oberteil 12 und einem Unterteil 13. Diese beiden Teile liegen mit einem Umfangsrand 14 über den gesamten Umfang aufeinander an, wie dies insbesondere aus Fig. 2 ersichtlich ist. Dabei ist an der schmalen Stirnseite 16 des Diapositiv-Rähmchens 10 eine Trennstelle 18 ausgebildet.

Entsprechend der Darstellung in Fig. 1 ist das Einführende 20 des Diapositiv-Rähmchens auseinanderspreizbar, wie dies durch die Pfeile S angedeutet ist. Das gegenüberliegende Ende 21 ist nicht aufspreizbar, weil beispielsweise das Oberteil 12 und das Unterteil 13 in diesem Bereich an den Stellen 22 verschweißt ist. Es kann aber auch eine andere Verbindung dort hergestellt werden. Die dazu seitlich liegenden Ränder 23 und 25 sind nicht aufspreizbar, mit Ausnahme des Bereiches, der für das Aufspreizen des Einführendes 20 notwendig ist, wie dies aus Fig. 1 ersichtlich ist. In diesen seitlichen Bereichen erfolgt eine Verschweißung über die Teile 28 (Fig. 3).

Im gemäß Fig. 1 auf auseinandergespreizten Zustand des Einführendes 20 kann das Diapositiv D entsprechend dem Pfeil A in das Einführende eingeschoben werden, wobei das Diapositiv D entlang den in Fig. 3 dargestellten seitlichen Führungsrippen 30 geführt ist.

Entsprechend der Darstellung in Fig. 2 bilden Oberteil 12 und Unterteil 13 einen Diapositiv-Aufnahmeraum 32. In dem in Fig. 2 dargestellten Zustand wird das Diapositiv D seitlich durch die Führungsrippen 30 in seiner eingeschobenen Lage gehalten, hauptsächlich aber durch am Oberteil 12 und Unterteil 13 angebrachte, ggf. am gleichen Ort vorgesehene Klemmvorsprünge 34. Normalerweise reichen diese Klemmvorsprünge 34 aus, das Diapositiv innerhalb der Rähmchens am gewünschten Ort zu halten. Das Ende des Einschiebvorganges kann dabei dadurch bestimmt sein, daß die Einschiebevorrichtung oder Positioniervorrichtung mit einer ganz bestimmten Hublänge arbeitet. In diesem Falle sind Endanschläge nicht notwendig. Derartige Endanschläge 36 können allerdings vorgesehen sein.

Insbesondere durch die Klemmvorsprünge 34 kann der Diapositiv-Aufnahmeraum um den in Fig. 3 dargestellten Abstand d verlängert werden mit der Folge, daß der Diapositiv-Aufnahmeraum in Einführrichtung A eine wesentlich größere Erstrek-kung hat als die Länge des Diapositivs D in dieser Richtung mit der Folge, daß ein Zwischenschieben des Diapositivs D zwischen die Anlageflächen 14 des Oberteils 12 und des Unterteils 13 mit Sicherheit vermieden werden kann. Dadurch wird außerdem vermieden, daß sich die Trennstelle 18 beim fertiggestellten Diarähmchen durch den zwischenliegenden Film aufspreizen kann, was beim Einschiebevorgang des Diarähmchens im Diaprojektor zu einer Zerstörung des Rähmchens führen kann.

Wenn die Anschläge 36 nicht vorhanden sind, so besteht hinsichtlich der Erstreckung des Diapositiv-Aufnahmeraumes in Einführrichtung noch ein größerer Bewegungsspielraum.

Zur Erläuterung des Erfindungsgegenstandes soll kurz dargelegt werden, wie der Rahmvorgang erfolgt.

Entsprechend der Darstellung in Fig. 1 wird zunächst das Einführende 20 des Diapositiv-Rähmchens 10 auseinandergespreizt und dann in Einführrichtung A das Diapositiv D eingeschoben, wobei es durch die seitlichen Führungsrippen 30 geführt wird. Sobald das voreilende Ende des Diapositivs in den Bereich der Klemmvorsprünge 34 gelangt, drückt der Film diese Vorsprünge leicht auseinander und kann zwischen die Vorsprünge gelangen, wodurch das Diapositiv an den beiden Klemmstellen gehalten und somit im Rähmchen positioniert wird, wozu auch eine einzige Klemmstelle ausreichen würde. Falls die in der Zeichnung dargestellten Endanschläge 36 vorhanden sind, erfolgt der Einschiebevorgang bis zum Anschlag. Da in Einführrichtung der Diapositiv-Aufnahmeraum wesentlich größer ist als das Diapositiv in dieser Erstreckung, wird mit Sicherheit vermieden, daß sich das Diapositiv zwischen die Umfangsflächen 14 legt, wo das Oberteil 12 und das Unterteil 13 aufeinanderliegen. Es ist noch zu erwähnen, daß wie üblich das Diapositiv-Rähmchen in seinem Mittelbereich ein Fenster 40 aufweist, welches jeweils im Oberteil 12 und im Oberteil 13 untergebracht ist.

## Ansprüche

1. Diapositiv-Rähmchen mit einem jeweils ein Fenster (40) aufweisenden Oberteil (12) und Unterteil (13), die am Umfangsrand (14) aufeinanderliegen und zwischen sich einen Diapositiv-Aufnahmeraum (32) bilden, dadurch **gekennzeichnet,** daß die beiden Teile (12, 13) des Diapositiv-Rähmchens (10) nur am Einführende (20) für das Diapositiv auseinanderspreizbar sind, daß der Diapositiv-Aufnahmeraum (32) in Einführrichtung (A) gesehen zwei seitliche Begrenzungen (30) aufweist, daß im Bereich des Diapositiv-Aufnahmeraumes (32) eine Klemmeinrichtung (34) für das Diapositiv vorgesehen ist und daß die Erstreckung des Diapositiv-Aufnahmeraumes (32) in Einführrichtung (A) gesehen deutlich größer bemessen ist als das vorgesehene Diapositiv in dieser Erstreckung.

2. Diapositiv-Rähmchen nach Anspruch 1, dadurch gekennzeichnet, daß am dem Einführende (20) entgegengesetzten, nicht auseinanderspreizbaren Ende (21) mindestens ein Endanschlag (36) für das Diapositiv vorgesehen ist.

3. Diapositiv-Rähmchen nach Anspruch 1 oder 2, dadurch gekennzeichnet, daß die Klemmeinrichtung (34) aus jeweils einem am Oberteil (12) und Unterteil (13) angebrachten elastisch bewegbaren Vorsprung (34) besteht.

4. Diapositiv-Rähmchen nach Anspruch 1, dadurch gekennzeichnet, daß die Klemmeinrichtung (34) im in Einführrichtung (A) hinteren Bereich des Diapositiv-Aufnahmeraumes (32) angeordnet ist und aus zwei Klemmstellen besteht.

EP 0 365 853 A1

*Fig.1*

*Fig.2*

*Fig.3*

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.) 5 |
|---|---|---|---|
| X | DE - A1 - 3 410 687 <br> (GREGOIS PHOTO EQUIPMENT) <br> * Fig. 1,4-6; Patent- <br> ansprüche; Zusammenfassung * <br> -- | 1-4 | G 03 B 21/64 <br> G 03 D 15/10 |
| X | DE - A1 - 2 748 676 <br> (FOROX) <br> * Fig. 15; Anspruch 1; Seite <br> 39, Zeilen 5-12 * | 1,2 | |
| A | * Fig. 15 * <br> -- | 4 | |
| A | DE - A1 - 2 941 809 <br> (FOROX) <br> * Fig. 2,4-10 * <br> -- | 1-4 | |
| A | GB - A - 1 510 249 <br> (GEIMUPLAST) <br> * Fig. 2 * <br> ---- | 1 | |

RECHERCHIERTE SACHGEBIETE (Int. Cl.) 5

G 03 D 15/00
G 03 B 21/00

Der vorliegende Recherchenbericht wurde für alle Patentansprüche erstellt.

| Recherchenort | Abschlußdatum der Recherche | Prüfer |
|---|---|---|
| WIEN | 18-01-1990 | KRAL |